# EUROPÄISCHE PATENTSCHRIFT

(11) **EP 1 227 406 B1**
(45) Veröffentlichungstag und Bekanntmachung des Hinweises auf die Patenterteilung: **10.12.2003**
(21) Anmeldenummer: 02100048.4
(22) Anmeldetag: 22.01.2002
(51) Int. Cl.: G06F 13/38

(54) **Transceiver mit Mitteln zum Fehlermanagement**
Transceiver with means for error management
Dispositif d'émission et de réception avec des moyens de gestion d'erreur

(30) Priorität: 24.01.2001 DE 10103092
(43) Veröffentlichungstag der Anmeldung: 31.07.2002
(73) Patentinhaber: Philips Intellectual Property & Standards GmbH, 20099 Hamburg (DE); Koninklijke Philips Electronics N.V., 5621 BA Eindhoven (NL)
(72) Erfinder: Muth, Matthias, Weisshausstrasse 2 D-52066 Aachen (DE)
(74) Vertreter: Volmer, Georg, Dipl.-Ing.

(56) Entgegenhaltungen:
- EP-A- 0 798 895
- DE-A- 19 611 942
- US-A- 5 781 585
- PHILIPS SEMICONDUCTORS: "DATA SHEET: TJA1050 High Speed Transceiver" PRELIMINARY SPECIFICATION, [Online] 27. September 1999 (1999-09-27), XP002191751 Gefunden im Internet: <URL:http://www.philips-semiconductors.com /acrobat/datasheets/TJA1050_1.pdf> [gefunden am 2002-02-28]
- PHILIPS SEMICONDUCTORS: "DATA SHEET: TJA1054 Fault-tolerant CAN transceiver" PRELIMINARY SPECIFICATION, [Online] 11. Februar 1999 (1999-02-11), XP002191752 Gefunden im Internet: <URL:http://www.kvaser.se/download/index.h tm> [gefunden am 2002-02-28]

## Beschreibung

Die Erfindung betrifft einen Transceiver für einen seriellen Datenbus, wobei der Transceiver einerseits über eine Sendeleitung und eine Empfangsleitung mit einem Protokoll Controller verbunden ist, der das Protokoll des Datenbusses managt. Der Transceiver ist andererseits mit den Leitungen des Datenbusses gekoppelt. Ferner weist der Transceiver Mittel zum Fehlermanagement auf.

In vielen seriellen Bussystemen ist vorgesehen, dass die Komponenten für die Protokollverarbeitung, also der Protokoll Controller, und die letztendlich erforderlichen Leitungstreiber, die in dem Transceiver vorgesehen sind, getrennt realisiert werden. Dies hat den Vorteil, dass beispielsweise bei Wahl anderer Medien ― wie Kupferkabel oder optischen Leitungen- derselbe Protokoll Controller verwendet werden kann; es muss lediglich der Transceiver entsprechend angepasst werden.

Die Trennung von Protokoll Controller und Transceiver hat zur Folge, dass zwischen beiden ein Informationsaustausch über ein Interface stattfinden muss. Hierzu ist eine Sendeleitung vorgesehen, mittels welcher der Protokoll Controller an den Transceiver übermittelt, dass auf dem Bus ein Schreibvorgang stattfinden soll. Umgekehrt vermittelt der Transceiver auf einer Empfangsleitung, dass er Daten auf dem Bus empfangen hat. Ein derartiger Aufbau ist beispielsweise bei vielen Transceivern bzw. Protokoll Controllern für den sogenannten CAN-Bus, der vor allem in Fahrzeugen eingesetzt wird, vorgesehen.

Gerade für derartige Einsatzzwecke ist die Verfügbarkeit eines Bussystems wichtig. Für das Bussystem sind vielfältige Verfahren bekannt, die die Zuverlässigkeit des Bussystems erhöhen sollen.

Auf der physikalischen Seite, also für die oben erwähnte Verbindung zwischen dem Protokoll Controller und dem Transceiver gilt ebenfalls, dass die Sendeleitung und/oder Empfangsleitung gestört sein können. Damit ist dann auch die Kommunikation zwischen diesen beiden Komponenten bzw. sogar in dem Btesystem gestört, so dass das Bussystem zum Erliegen gebracht werden kann.

In einigen Transceivern der Firma Philips, die in integrierten Schaltkreisen verwirklicht sind und die Typenbezeichnungen TJA 1050 und TJA 1054 tragen, sind Vorkehrungen getroffen worden, zu verhindern, dass der Transceiver dauerhaft aktiv ist, beispielsweise weil die Sendeleitung auf aktiven Zustand geklemmt ist. Eine dauerhaft aktive Sendeleitung kann in der Praxis nur durch einen Fehler verursacht sein, da eine dominante Sendezeit in der Regel nur begrenzt sein kann, so dass Flanken auftreten. Ist die Sendeleitung jedoch dauerhaft aktiv, kann auf einen Kurzschluss geschlossen werden. In diesem Falle wird in den erwähnten IC-Typen ein Timer gestartet, der den aktiven Zustand der Sendeleitung überwacht und nach einer vorgegebenen Zeit den Treiberausgang des Transceivers abschaltet. Sobald die Sendeleitung wieder den Zustand "nicht aktiv" einnimmt, wird bei dieser Lösung der Treiberausgang wieder aktiv und der Timer zurückgesetzt.

Diese Lösung nach dem Stand der Technik kann nur den Fehlerfall decken, dass die Sende-leitung auf einen dauerhaft aktiven Zustand geklemmt ist. Es können jedoch weitere Fehler auf der Empfängerleitung und/oder der Sendeleitung auftreten, die durch diese Lösung nicht abgedeckt werden.

Es ist daher Aufgabe der Erfindung, einen Transceiver einzugeben, der auch andere Fehlerbedingungen, insbesondere der Empfängerleitung zwischen Transceiver und Protokoll Controller, abdecken kann und ein Blockieren des Datenbusses in einem solchen Fehlerfall verhindern kann.

Diese Aufgabenstellung ist für eine erste Ausführungsform der Erfindung durch die Merkmale des Patentanspruches 1 gelöst:

Transceiver für einen seriellen Datenbus, wobei der Transceiver einerseits über eine Sende-leitung und eine Empfangsleitung mit einem Protokoll Controller, der ein Datenbus-Protokoll managt, und andererseits mit den Leitungen des Datenbusses gekoppelt ist, und wobei der Transceiver Mittel zum Fehlermanagement aufweist, welche dann, wenn sie erkennen, dass die Datenbusleitungen aktiv sind und gleichzeitig die Empfangsleitung einen inaktiven Bus signalisiert, ein Fehlersignal abgeben, welches bewirkt, dass der Transceiver nicht mehr aktiv auf den Datenbus einwirkt.

Diese erste Ausführungsform der Erfindung schafft eine Lösung für den Fehlerfall, dass die Empfangsleitung (RXD) dauerhaft auf inaktiv geklemmt ist. In einem solchen Fall würde der Protokoll Controller zu beliebigen Zeitpunkten anfangen auf dem Datenbus zu senden, weil er davon ausgeht, dass der Bus frei ist. Gegebenenfalls auf dem Datenbus laufende Übertragungen werden somit zerstört, und die Verfügbarkeit des Bussystems bis zum vollständigen Ausfall eingeschränkt. Um dies zu vermeiden, sind gemäß der ersten Ausführungsform der Erfindung in dem Transceiver Mittel zum Fehlermanagement vorgesehen. Diese überprüfen, ob gleichzeitig Datenbusleitungen aktiv sind, die Empfangsleitung aber einen inaktiven Bus signalisiert. Dies wäre genau der oben beschriebene Fehlerfall, in dem die Datenleitung auf inaktiv geklemmt ist, tatsächlich aber der Datenbus aktiv ist. Die erfindungsgemäßen Mittel zum Fehlermanagement verhindern in diesem Fall, dass der Datenbus durch den Protokoll Controller bzw. den Transceiver belegt werden kann, indem die Mittel zum Fehlermanagement ein Fehlersignal abgeben, welches bewirkt, dass der Transceiver nicht mehr aktiv auf den Datenbus einwirkt, also keine dominanten Bits auf dem Datenbus sendet. Damit ist für den oben beschriebenen Fehlerfall sichergestellt, dass durch ein Inaktiv-Klemmen der Empfangsleitung der Transceiver bzw. der Protokoll Controller nicht mehr auf dem Bus Daten senden können und somit auf dem Bus stattfindenden Datenverkehr nicht zerstören. Besonders vorteilhaft ist, dass der Fehlerzustand schon erkannt wird, bevor es zu einer Beeinträchtigung der Kommunikation auf dem Bus kommt.

Die o.a. Aufgabe ist für eine zweite Ausführungsform der Erfindung durch die Merkmale des Patentanspruches 2 gelöst:

Transceiver für einen seriellen Datenbus, wobei der Transceiver einerseits über eine Sende-leitung und eine Empfangsleitung mit einem Protokoll Controller, der ein Datenbus-Protokoll managt, und andererseits mit den Leitungen des Datenbusses gekoppelt ist, und wobei der Transceiver Mittel zum Fehlermanagement aufweist, welche eine Timerschaltung aufweisen, die dann, wenn die Sendeleitung länger als eine vorgegebene Zeitspanne aktiv ist, ein Fehlersignal auslöst, welches bewirkt, dass der Transceiver nicht mehr aktiv auf den Datenbus einwirkt und welches erst dann aufgehoben wird, wenn die Sendeleitung einen inaktiven und die Empfangsleitung einen aktiven Bus signalisieren.

Eine weitere mögliche Fehlerursache der oben beschriebenen Art kann darin bestehen, dass die Empfängerleitung auf die Sendeleitung geklemmt ist, dass also zwischen beiden ein Kurzschluss besteht. Ferner besteht die Möglichkeit, dass die Sendeleitung dauerhaft auf aktiv geklemmt ist.

In beiden Fällen ist die Sendeleitung dauerhaft aktiv, wodurch der Bus gestört ist. Ist die Sendeleitung auf aktiv geklemmt, so tritt diese Folge unmittelbar ein. Sind die Empfangsund die Sendeleitung miteinander gekoppelt (kurzgeschlossen), so findet eine Rückkoppelung statt, sobald ein beliebiger Teilnehmer anfängt zu senden, da der aktuelle Buszustand auf der Empfangsleitung zurückgekoppelt wird und über diese Rückkoppelung von der Empfangsleitung auf die Sendeleitung der Buszustand weiter aktiv gehalten wird.

Gemäß der zweiten Ausführungsform der Erfindung wird dieses Problem dadurch gelöst, dass der erfindungsgemäße Transceiver Mittel zum Fehlermanagement aufweist, welche dann, wenn die Sendeleitung länger als eine vorgegebene Zeitspanne aktiv ist, mittels einer Timerschaltung ein Fehlersignal auslösen, welches bewirkt, dass der Transceiver nicht mehr aktiv auf den Datenbus einwirkt. Im Unterschied zum Stand der Technik wird dieses Fehlersignal jedoch nicht zeitabhängig aufgehoben, sondern bleibt so lange bestehen, bis die Sendeleitung einen inaktiven und die Empfangsleitung einen aktiven Bus signalisieren.

Diese Aufhebungsbedingung für den Fehlerzustand ist wesentlich, da nach der Lösung nach dem Stand der Technik nach Erkennung des Fehlerzustandes der Bus wieder freiggeben wird. Dann wird aber bei dieser Lösung auch der Timer wieder zurückgesetzt, da ja das Problem wieder beseitigt ist. Der nachfolgend nächste stattfindende Sendeversuch auf dem Datenbus setzt nach der Lösung nach dem Stand der Technik diesen Zyklus wieder erneut in Gang Damit ist jedoch die eigentliche Problematik, nämlich die Störung des Datenbusses, nicht behoben.

Gemäß der erfindungsgemäßen Lösung ist jedoch sichergestellt, dass das Fehlersignal erst dann wieder aufgehoben wird, wenn der Fehlerzustand mit Sicherheit behoben ist. Dieses ist dann der Fall, wenn einerseits die Empfangsleitung einen aktiven Bus signalisiert, andererseits aber die Sendeleitung inaktiv ist.

Gemäß einer Ausgestaltung der Erfindung ist für die erste Ausführungsform gemäß Patentanspruch 3 vorgesehen, dass das Fehlersignal abgeschaltet wird, wenn die Empfangsleitung RXD einen aktiven Bus signalisiert. In diesem Fall ist sichergestellt, dass die Klemmung der Empfangsleitung auf inaktiv autgehoben und die Störung beseitigt ist.

Um auf einfache und dennoch sichere Weise sicherzustellen, dass in einem Fehlerfall ein Senden des Transceivers, gesteuert durch den Protokoll Controller, ausgeschlossen ist, ist gemeinsam für beide Ausführungsformen der Erfindung gemäß einer weiteren Ausgestaltung nach Anspruch 4 vorgesehen, dass bei auftretendem Fehlersignal eine in dem Transceiver vorgesehene Bus-Sendestufe inaktiv geschaltet wird. Somit ist in diesem Fall eine aktive Beeinflussung des Busses ausgeschlossen.

Ebenfalls gemeinsam für beide Ausführungsformen ist gemäß einer weiteren Ausgestaltung der Erfindung nach Anspruch 5 vorgesehen, dass das Fehlersignal über eine Fehlerleitung nach außen signalisiert wird. Dies ist insbesondere vorteilhaft, um dem Protokoll Controller den Fehlerzustand zu signalisieren, damit dieser nicht weitere Sendeversuche unternimmt, und um eine Anwendung über den fehlerhaften Buszustand zu informieren.

Der Fehlerzustand kann nur aufgehoben werden, wenn mindestens ein Busteilnehmer wieder aktiv sendet und damit die erwarteten Signale an der sende- und Empfangsleitung auftreten. Ist im System zum Zeitpunkt der Fehlerbehebung kein weiterer Teilnehmer vorhanden, bleibt der bisher gestörte Knoten trotz Fehlerbehebung im Fehlerzustand. Um aus diesem herauszugelangen, ist gemeinsam für beide Ausführungsformen der Erfindung nach Patentanspruch 6 eine Steuerleitung vorgesehen, deren Aktivierung die Mittel zum Fehlermanagement in dem Transceiver zurücksetzt und so das Fehlersignal inaktiv schaltet. Somit kann, gesteuert über diese Sendeleitung, auch in dem Fehlerfall ein Rücksetzen der Fehledbedingung über die Sendeleitung erzeugt werden.

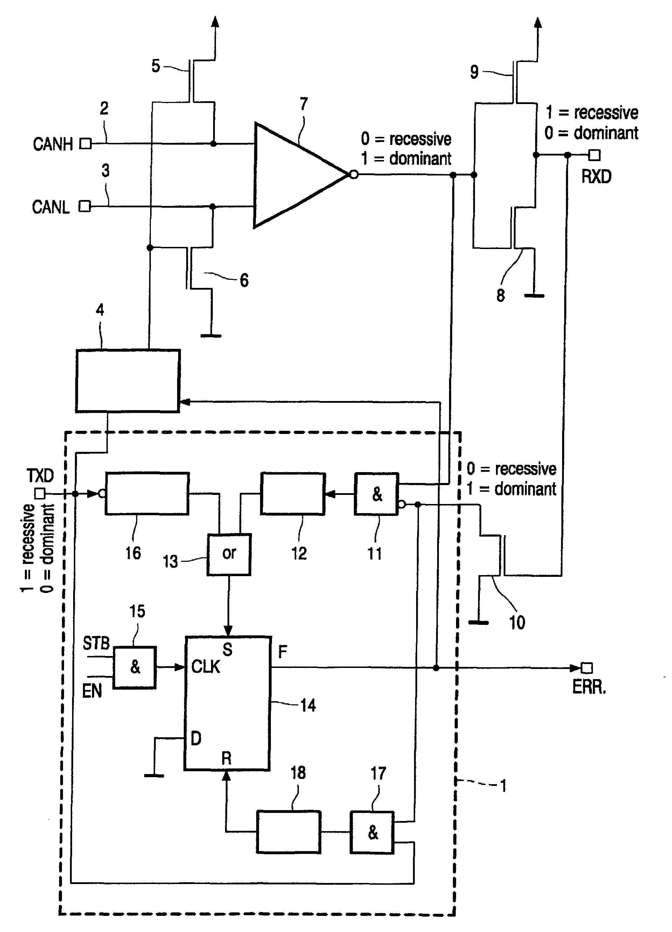

Nachfolgend wird ein Ausführungsbeispiel der Erfindung anhand der Zeichnung näher erläutert.

Die einzige Figur der Zeichnung zeigt größtenteils in Form eines Blockschaltbildes einen erfindungsgemäßen Transceiver für einen seriellen Datenbus mit Mitteln 1 zum Fehlermanagement.

Bei dem Ausführungsbeispiel gemäß der Figur handelt es sich bei dem Datenbus um einen sogenannten CAN-Bus, der vielfach in Fahrzeugen eingesetzt wird und bei dem es sich um einen Zweidrahtbus handelt, auf dem dominante Bits differenziell gesendet werden.

Dazu ist eine erste Datenbusleitung 2 vorgesehen, welche mit CAN H bezeichnet wird, sowie eine zweite Datenbusleitung 3, welche mit CAN L bezeichnet wird. Beim Senden eines Bits auf den Datenbusleitungen wird das Potential der ersten Datenbusleitung 2 angehoben und das der zweiten Datenbusleitung 3 abgesenkt.

Der in der Figur dargestellte Transceiver weist einen Transmitter 4 auf, welcher eine erste Bus-Sendestufe 5 sowie eine zweite Bus-Sendestufe 6 ansteuert. Die erste Bus-Sendestufe 5 ist mit einem positiven Bezugspotential gekoppelt; wohingegen die zweite Bussendestufe 6 mit Bezugspotential gekoppelt ist. In dem Falle, dass ein aktives Bit gesendet werden soll, steuert der Transmitter 4 die beiden Sendestufen 5 und 6 an, so dass die entsprechenden Potentialverschiebungen auf den beiden Busleitungen 2 und 3 vorgenommen werden. Dazu wird der Transmitter 4 über eine Sendeleitung TXD von einem in der Figur nicht dargestellten Protokoll Controller entsprechend angesteuert.

Dieser, in der Figur nicht dargestellte Protokoll Controller, nimmt die Steuerung des Sendens und auch des Empfangens auf dem Datenbus entsprechend dem Datenbusprotokoll vor. Der in der Figur dargestellte Transceiver wird also letztlich durch diesen Protokoll Controller gesteuert.

Das Blockschaltbild gemäß der Figur zeigt ferner einen Differenzverstärker 7, dessen invertierter Ausgang im Zustand 0 signalisiert, dass der Datenbus, also die beiden Datenbusleitungen 2 und 3, rezessiv ist. Liefert der Differentialverstärker 7 hingegen ein Signal hohen Pegels, so wind damit signalisiert, dass auf dem Datenbus ein dominantes Bit gesendet wird. Dieses Signal wird über eine mittels zwei Transistoren 8 und 9 aufgebaute Push-Pull-Treiberstufe auf eine Empfangsleitung RXD signalisiert. Diese Empfangsleitung wird vor allem durch den in der Figur nicht dargestellten Protokoll Controller ausgewertet. Somit ist dem Protokoll Controller über das auf der Empfangsleitung RXD empfangene Signal jederzeit bekannt, welche Vorgänge auf dem Datenbus bzw. auf den Datenbusleitungen 2 und 3 stattfinden.

Ein derartiges Datenbussystem kann beispielsweise in einem Kraftfahrzeug vorgesehen sein. In einer derartigen Umgebung wird besonderer Wert darauf gelegt, dass Fehler, die insbesondere in Kurzschlüssen der Leitungen bestehen, den Datenbusverkehr möglichst wenig stören. Für Fehler auf den Datenbusleitungen 2 und 3 selbst sind nach dem Stand der Technik vielfache Lösungen bekannt. Bei der Lösung gemäß der Figur, bei der der Transceiver, der in der Figur dargestellt ist, und der Protokoll Controller getrennt aufgebaut sind, kann zusätzlich eine Störung des Betriebes dadurch eintreten, dass eine der beiden Leitungen zwischen diesen, nämlich entweder die Empfangsleitung oder die Sendeleitung gestört sind, beispielsweise indem zwischen ihnen ein Kurzschluss stattfindet oder indem eine der beiden Leitungen auf einen festen Zustand geklemmt ist.

Ein derartiger Fehler kann beispielsweise darin bestehen, dass die Empfangsleitung RXD dauerhaft auf inaktiv geklemmt ist. In diesem Fall würde der Protokoll Controller annehmen, dass der Datenbus frei ist und würde versuchen, zu senden. Wenn aber gleichzeitig auf dem Datenbus bereits ein Datenverkehr stattfindet, würde dieser massiv gestört bis zur vollständigen Unterbrechung des Datenverkehrs. Um eben diesen Fehlerfall zu erkennen, ist gemäß der ersten Ausführungsform der Erfindung vorgesehen, dass ein Fehlersignal erzeugt wird, wenn die Mittel 1 zum Fehlermanagement erkennen, dass die Datenbusleitungen aktiv sind, gleichzeitig aber die Empfangsleitung RXD einen inaktiven Bus signalisiert. Dieser Fall würde zB. dann eintreten, wenn die Empfangsleitung auf inaktiv geklemmt ist.

Die Mittel 1 zum Fehlermanagement weisen zum Abfangen dieser Fehlerbedingung ein erstes UND-Gatter 11 auf, auf dessen ersten, nicht invertierenden Eingang der Ausgang des Differenzverstärkers 7 gekoppelt ist. Auf einen zweiten invertierenden Eingang des ersten UND-Gatters 11 ist das Signal der Empfangsleitung RXD gekoppelt, welches mittels einer Transistorstufe 10 aus der Empfangsleitung ausgekoppelt und invertiert wird.

Dem ersten UND-Gatter 11 ist ein Filter 12 nachgeschaltet, bei dem es sich um ein Zeitfilter handelt und welches die Laufzeiten bzw. Umladezeiten bis zum RXD-Pin berücksichtigt. Durch dieses Zeitfilter wird also das Ausgangssignal des UND-Gatters 11 während bestimmter Zeiten unterdrückt, in denen damit gerechnet werden muss, dass durch unterschiedliche Laufzeiten der beiden dem UND-Gatter 11 zugeführten Signale ein fehlerhaftes Ausgangssignal des UND-Gatters 11 auftritt.

Das Ausgangssignal des Zeitfilters 12 ist über ein ODER-Gatter 13 auf ein D-Flip-Flop 14 gekoppelt. Dieses Signal ist einem SetzeingangS des D-Flip-Flops zugeführt. Ein Ausgang des D-Flip-Flops F liefert ein Fehlersignal F. Dieses Fehlersignal F ist einerseits auf den Transmitter 4 gekoppelt und wird andererseits über eine Fehlerleitung ERR an externe Bauelemente signalistert, beispielsweise an den oben erwähnten, in der Figur nicht dargestellten Protokoll Controller.

Das D-Flip-Flop 14 weist ferner einen Takteingang CLK auf, auf den das Ausgangssignal eines dritten UND-Gatters 15 gekoppelt ist, welches mittels zweier Signale STB und EN angesteuert wird. Weisen beide Signale diesen hohen Pegel auf, wird über das entsprechende Ausgangssignal des dritten UND-Gatters 15 der Takteingang des Flip-Flops 14 angesteuert, so dass auf diese Weise ein Rücksetzen des Flip-Flops 14 stattfinden kann. Dies kann beispielsweise dazu dienen, auch im Fehlerfall, wenn also das D-Flip-Flop an sich gesetzt ist, ein Rücksetzen vorzunehmen. Dies kann für Prüfzwecke oder Notlaufzwecke vorteilhaft sein.

Der D-Eingang des Flip-Flops 14 ist mit Bezugspotential gekoppelt.

Diese Verschaltung der Mittel 1 zum Fehlermanagement decken den Fall ab, dass die Datenbusleitungen aktiv sind, gleichzeitig aber die Empfangsleitung einen inaktiven Datenbus signalisiert. Dieser Fall kann beispielsweise dadurch eintreten, dass die Empfangsleitung auf inaktiv geklemmt ist. In diesem Fehlerfall würde das erste UND-Gatter 11 ein entsprechendes Ausgangssignal liefern, welches über das Filter 12 und das ODER-Gatter 13 zu einem Setzen des D-Flip-Flops führen würde. Ist das D-Flip 14 gesetzt, liefert es ein Fehlersignal, welches einerseits bewirkt, dass dem Transmitter 4 signalisiert wird, dass ein Fehlerfall vorliegt. In diesem Fall schaltet der Transmitter 4 dies Sendestufen 5 und 6 inaktiv, so dass ein ggf. auf den Datenbusleitungen 2 und 3 durch andere Teilnehmer stattfindender Datenverkehr nicht gestört wird. Ferner wird dieses Fehlersignal über die Fehlerleitung ERR dem in der Figur nicht dargestellten Protokoll Controller signalisiert, so dass dieser keine weiteren Sendeversuche unternimmt.

Ein anderer möglicher Fehlerfall besteht darin, dass die Sendeleitung TXD dauerhaft auf aktiv geklemmt ist, oder dass die Sendeleitung TXD mit der Empfangsleitung RXD geklemmt ist, also zwischen beiden ein Kurzschluss stattfindet.

Um diesen Fehlerfall abzudecken, ist gemäß der zweiten Ausführungsform der Erfindung eine Timer-Schaltung 16 vorgesehen, welche dann, wenn die Sendeleitung TXD länger als eine vorgegebene Zeit aktiv ist, ein Ausgangssignal erzeugt, welches über das ODER-Gatter 13 ebenfalls zu einem Setzen des D-Flip-Flops führt. Es wird also auf diese Weise ein während einer vorgegebenen Zeitspanne dauerhaft aktiver Zustand der Sendeleitung TXD erkannt und unter dieser Bedingung das Fehlersignal F erzeugt. Ein derartiger, während einer vorgegebenen Zeitspanne dauerhaft aktiver Zustand der Sendeleitung TXD darf nach dem Datenbusprotokoll nicht auftreten, da nach diesem Protokoll in gewissen Mindestzeitabständen ein inaktiver Zustand des Datenbusses vorgesehen ist. Es muss sich also unter dieser Bedingung um einen Fehler handeln, bei dem mittels der Mittel 1 zum Fehlermanagement das Fehlersignal F ausgelöst wird.

Das in der Figur dargestellte Ausführungsbeispiel der Erfindung verknüpft somit auf vorteilhafte Weise beide Ausführungsformen der Erfindung indem für beide Ausführungsformen ein gemeinsames D-Flip-Flop vorgesehen ist, welches unter den jeweiligen Fehlerbedingungen angesteuert wird. Auch die Aufhebung des Fehlersignals F wird in dem Ausführungsbeispiel gemäß der Figur für beide Ausführungsformen der Erfindung gemeinsam vorgenommen.

Als Aufhebebedingung wird angenommen, dass für alle oben genannten Fehler deren Beseitigung angenommen werden kann, wenn die Sendeleitung RXD inaktiv und die Empfangsleitung aktiv ist. In einem solchen Fall muss beispielsweise eine ggf. auf inaktiv geklemmte Empfangsleitung wieder frei sein. Ferner muss ein Kurzschluss zwischen Sendeleitung und Empfangsleitung beseitigt sein. Auch kann die Sendeleitung nicht dauerhaft auf aktiv geklemmt sein.

Zum Aufheben des Fehlersignals ist ein zweites UND-Gatter 17 vorgesehen, auf dessen erstem Eingang das Ausgangssignal der Transistorstufe 10 gekoppelt ist. Es ist also auf diesen Eingang das invertierte Signal der Empfangsleitung RXD gekoppelt. Auf einen zweiten Eingang des UND-Gatters 17 ist das Signal der Sendeleitung TXD gekoppelt.

Das zweite UND-Gatter 17 liefert gerade dann ein Ausgangssignal, wenn die Sende-leitung inaktiv und die Empfangsleitung aktiv ist. In diesem Fall wird das Signal wiederum über ein Filter 18 zum Ausgleich von Laufzeiten auf einen Reset-Eingang des D-Flip-Flops 14 gekoppelt. Somit wird das D-Flip-Flop 14 unter der genannten Bedingung wieder zurückgesetzt, so dass das Fehlersignal F wieder auf inaktiv geschaltet wird. Dieses wird über die Fehlerleitung ERR an den Protokoll Controller signalisiert. Gleichzeitig wird der Transmitter 4 entsprechend die Treiberstufen 5 und 6 wieder aktiv schalten, sofern eine entsprechende Sendeanforderung über die Leitung TXD stattfindet.

Der in der Figur dargestellte Transceiver weist somit Mittel 1 zum Fehlermanagement auf, welche drei wesentliche Fehlerbedingungen abdecken. Die Schaltung gemäß dem Ausführungsbeispiel deckt beide Ausführungsformen der Erfindung ab, was mit relativ geringem Schaltungsaufwand gelingt, da für beide Ausführungsformen der Erfindung ein gemeinsames D-Flip-Flop 14 zum Erzeugen des Fehlersignals vorgesehen ist. Auch der Rücksetzvorgang des Fehlersignals wird über für beide Ausführungsformen gemeinsam vorgesehene Schaltungselemente erzeugt.

Gegenüber den Lösungen nach dem Stand der Technik gelingt somit eine sicherere und umfangreichere Fehlererkennung auf den beiden Leitungen zwischen Transceiver und Protokoll Controller. Somit wird bei relativ geringem Schaltungsaufwand die Betriebssicherheit des Datenbusses wesentlich erhöht, da die in der Realität vorkommenden möglichen Fehlerbedingungen abgedeckt werden und weiterhin ein ungestörter Datenverkehr auf den Datenbusleitungen 2 und 3 auch bei gestörter Empfangs- und/oder Sendeleitung durch andere Teilnehmer auf dem Datenbus stattfinden kann.

## Patentansprüche

1. Transceiver für einen seriellen Datenbus, wobei der Transceiver einerseits über eine Sendeleitung (TXD) und eine Empfangsleitung (RXD) mit einem Protokoll Controller, der ein Datenbus-Protokoll managt, und andererseits mit den Leitungen (2,3) des Datenbusses gekoppelt ist, und wobei der Transceiver Mittel (1) zum Fehlermanagement aufweist, welche dann, wenn sie erkennen, dass die Datenbusleitungen (2,3) aktiv sind und gleichzeitig die Empfangsleitung (RXD) einen inaktiven Bus signalisiert, ein Fehlersignal (F) abgeben, welches bewirkt, dass der Transceiver nicht mehr aktiv auf den Datenbus einwirkt.

2. Transceiver für einen seriellen Datenbus, wobei der Transceiver einerseits über eine Sendeleitung (TXD) und eine Empfangsleitung (RXD) mit einem Protokoll Controller, der ein Datenbus-Protokoll managt, und andenerseits mit den Leitungen (2,3) des Datenbusses gekoppelt ist, und wobei der Transceiver Mittel (1) zum Fehlermanagement aufweist, welche eine Timerschaltung (16) aufweisen, die dann, wenn die Sendeleitung (TXD) länger als eine vorgegebene Zeitspanne aktiv ist, ein Fehlersignal (F) auslöst, welches bewirkt, dass der Transceiver nicht mehr aktiv auf den Datenbus einwirkt und welches erst dann aufgehoben wird, wenn die Sendeleitung (TXD) einen inaktiven und die Empfangsleitung (RXD) einen aktiven Bus signalisieren.

3. Transceiver nach Anspruch 1,
**dadurch gekennzeichnet,**
**dass** die Mittel (1) zum Fehlermanagement das Fehlersignal (F) abschalten wenn die Sendeleitung (TXD) einen inaktiven und die Empfangsleitung (RXD) einen aktiven Bus signalisiert.

4. Transceiver nach Anspruch 1 oder 2,
**dadurch gekennzeichnet,**
**dass** das Fehlersignal (F) eine in dem Transceiver vorgesehene Bus-Sendestufe (5,6) inaktiv schaltet.

5. Transceiver nach Anspruch 1 oder 2,
**dadurch gekennzeichnet,**
**dass** das Fehlersignal (F) mittels einer Fehlerleitung (ERR) nach außen, insbesondere an eine einem Protokoll-Controller übergeordnete Anwendung, signalisiert wird.

6. Transceiver nach Anspruch 1 oder 2,
**dadurch gekennzeichnet,**
**dass** eine Steuerleitung vorgesehen ist, deren Aktivierung die Mittel (1) zum Fehlermanagement zurücksetzt und so das Fehlersignal (F) inaktiv schaltet.

7. Transceiver nach den Ansprüchen 1 und 2,
**dadurch gekennzeichnet,**
**dass** die Mittel (1) zum Fehlermanagement ein Flip-Flop (14) aufweisen, welches im gesetzten Zustand das Fehlersignal (F) abgibt.

8. Transceiver nach den Ansprüchen 1 und 7,
**dadurch gekennzeichnet,**
**dass** die Mittel (1) zum Fehlermanagement ein erstes UND-Gatter (11) aufweisen, dessen Ausgangssignal auf das Flip-Flop (14) gekoppelt ist und dieses setzt, wenn die Datenbusleitungen (2,3) aktiv sind und gleichzeitig die Empfangsleitung (RXD) einen inaktiven Bus signalisiert.

9. Transceiver nach den Ansprüchen 2 und 7,
**dadurch gekennzeichnet,**
**dass** die Timerschaltung (16) in den Mitteln (1) zum Fehlermanagement das Flip-Flop (14) setzen, wenn die Sendeleitung (TXD) länger als eine vorgegebene Zeitspanne aktiv ist.

10. Transceiver nach den Ansprüchen 1, 2 und 7,
**dadurch gekennzeichnet,**
**dass** ein zweites UND-Gatter (17) vorgesehen ist, auf dessen Eingänge das Empfangssignal (RXD) und das Sendesignal (TXD) gekoppelt sind und welches das Flip-Flop (14) zurückgesetzt und somit das Fehlersignal (F) inaktiv schaltet, wenn die Sendeleitung (TXD) einen aktiven und die Empfangsleitung (RXD) einen inaktiven Bus signalisieren.

## Claims

1. A transceiver for a serial data bus, in which the transceiver is connected via a transmission line (TXD) and a receiving line (RXD) to a protocol controller, which manages a data bus protocol, and to the lines (2, 3) of the data bus, and in which the transceiver comprises means (1) for error management which supply an error signal (F) when they recognize that the data bus lines (2, 3) are active and when the receiving line (RXD) simultaneously signalizes an inactive bus, said error signal having the effect that the transceiver no longer acts actively on the data bus.

2. A transceiver for a serial data bus, in which the transceiver is connected via a transmission line (TXD) and a receiving line (RXD) to a protocol controller, which manages a data bus protocol, and to the lines (2, 3) of the data bus, and in which the transceiver comprises means (1) for error management, which means comprise a timer circuit (16) which triggers an error signal (F) when the transmission line (TXD) is active for a longer period than a predetermined time interval, said error signal having the effect that the transceiver no longer acts actively on the data bus, which error signal is cancelled only when the transmission line (TXD) signalizes an inactive bus and the receiving line (RXD) signalizes an active bus.

3. A transceiver as claimed in claim 1, **characterized in that** the means (1) for error management switch off the error signal (F) when the transmission line (TXD) signalizes an inactive bus and the receiving line (RXD) signalizes an active bus.

4. A transceiver as claimed in claim 1 or 2, **characterized in that** the error signal (F) switches a bus transmission stage (5, 6) in the transceiver to the inactive state.

5. A transceiver as claimed in claim 1 or 2, **characterized in that** the error signal (F) is signalized to the exterior by means of an error line (ERR), particularly to an application having priority over a protocol controller.

6. A transceiver as claimed in claim 1 or 2, **characterized in that** a control line is provided, whose activation resets the means (1) for error management and thus switches the error signal (F) to the inactive state.

7. A transceiver as claimed in claims 1 and 2, **characterized in that** the means (1) for error management comprise a flip-flop (14) which, in the set state, supplies the error signal (F).

8. A transceiver as claimed in claims 1 and 7, **characterized in that** the means (1) for error management comprise a first AND gate (11) whose output signal is applied to the flip-flop (14) and which sets this flip-flop when the data bus lines (2, 3) are active and when the receiving line (RXD) simultaneously signalizes an inactive bus.

9. A transceiver as claimed in claims 2 and 7, **characterized in that** the timer circuit (16) in the means (1) for error management set the flip-flop (14) when the transmission line (TXD) is active for a longer period than a predetermined time interval.

10. A transceiver as claimed in claims 1, 2 and 7, **characterized in that** a second AND gate (17) is provided whose inputs receive the reception signal (RXD) and the transmission signal (TXD) and which resets the flip-flop (14) and thus switches the error signal (F) to an inactive state when the transmission line (TXD) signalizes an active bus and the receiving line (RXD) signalizes an inactive bus.

## Revendications

1. Emetteur/récepteur pour un bus de données séquentiel, l'émetteur/récepteur étant couplé, d'une part, par l'intermédiaire d'une ligne de transmission (TXD) et d'une ligne de réception (RXD) à un gestionnaire de protocole qui gère un protocole de bus de données et, d'autre part, aux lignes (2, 3) du bus de données et l'émetteur /récepteur présentant des moyens (1) de gestion des erreurs qui, lorsqu'ils reconnaissent que les lignes du bus de données (2, 3) sont actives et la ligne de réception (RXD) signale un bus inactif, délivrent un signal d'erreur (F) qui permet que l'émetteur/récepteur n'agisse plus activement sur le bus de données.

2. Emetteur/récepteur pour un bus de données séquentiel, l'émetteur/récepteur étant couplé, d'une part, par l'intermédiaire d'une ligne de transmission (TXD) et d'une ligne de réception (RXD) à un gestionnaire de protocole qui gère un protocole de bus de données et, d'autre part, aux lignes (2, 3) du bus de données et l'émetteur /récepteur présentant des moyens (1) de gestion des erreurs qui présentent un circuit temporisateur (16) qui, lorsqu'une ligne de transmission (TXD) est active plus longtemps qu'un intervalle de temps préalablement déterminé, déclenche un signal d'erreur (F) qui permet que l'émetteur /récepteur n'agisse plus activement sur le bus de données et qui n'est supprimé que lorsque la ligne de transmission (TXD) signale un bus inactif et la ligne de réception (RXD) un bus actif.

3. Emetteur/récepteur selon la revendication 1, **caractérisé en ce que** les moyens (1) de gestion des erreurs désactivent le signal d'erreur (F) lorsque la ligne de transmission (TXD) signale un bus inactif et la ligne de réception (RXD) un bus actif.

4. Emetteur/récepteur selon l'une des revendications 1 ou 2,
**caractérisé en ce que** le signal d'erreur (F) inactive un étage d'émission de bus (5, 6) prévu dans l'émetteur/récepteur.

5. Emetteur/récepteur selon l'une des revendications 1 ou 2, **caractérisé en ce que** le signal d'erreur (F) est signalé vers l'extérieur à l'aide d'une ligne d'erreur (ERR), en particulier à une application supérieure au gestionnaire de protocole.

6. Emetteur/récepteur selon l'une des revendications 1 ou 2, **caractérisé en ce qu'**il est prévu une ligne de commande dont l'activation réinitialise les moyens (1) de gestion des erreurs et inactive dès lors le signal d'erreur (F).

7. Emetteur/récepteur selon l'une des revendications 1 et 2, **caractérisé en ce que** les moyens (1) de gestion des erreurs présentent une bascule bistable (14) qui délivre le signal d'erreur (F) à l'état activé.

8. Emetteur/récepteur selon l'une des revendications 1 et 7,
**caractérisé en ce que** les moyens (1) de gestion des erreurs présentent une première grille ET (11) dont le signal de sortie est couplé à la bascule bistable (14) et active celle-ci lorsque les lignes du bus de données (2, 3) sont actives et la ligne de réception (RXD) signale simultanément un bus inactif.

9. Emetteur/récepteur selon l'une des revendications 2 et 7, **caractérisé en ce que** le circuit temporisateur (16) active la bascule bistable 14 dans les moyens (1) de gestion des erreurs lorsque la ligne de transmission (TXD) est active plus longtemps qu'un intervalle de temps préalablement déterminé.

10. Emetteur/récepteur selon l'une des revendications 1, 2 et 7, **caractérisé en ce qu'**il est prévu une deuxième grille ET (17) aux entrées de laquelle sont couplés le signal de réception (RXD) et le signal de transmission (TXD) et qui réinitialise la bascule bistable (14) et, dès lors, inactive le signal d'erreur (F) lorsque la ligne de transmission (TXD) signale un bus actif et la ligne de réception (RXD) un bus inactif.
